# FASCICULE DE BREVET EUROPEEN

(11) **EP 3 880 541 B1**
(45) Date de publication et mention de la délivrance du brevet: **28.02.2024**
(21) Numéro de dépôt: 19798094.9
(22) Date de dépôt: 08.11.2019
(51) Int. Cl.: B62D 25/14, B62D 29/04, B29C 64/118, B33Y 80/00

(54) **CORPS DE PLANCHE DE BORD À STRUCTURE LACUNAIRE ET CONDUITS DE CIRCULATION DE FLUIDE INTÉGRÉS**
ARMATURENBRETTKÖRPER MIT EINER VERTIEFUNGSSTRUKTUR UND INTEGRIERTEN FLUIDZIRKULATIONSKANÄLEN
DASHBOARD BODY WITH A LACUNARY STRUCTURE AND INTEGRATED FLUID CIRCULATION DUCTS

(30) Priorité: 15.11.2018 FR 1860515
(43) Date de publication de la demande: 22.09.2021
(73) Titulaire: Renault s.a.s, 92100 Boulogne Billancourt (FR); NISSAN MOTOR Co., Ltd., Yokohama-shi, Kanagawa 221-0023 (JP)
(72) Inventeur: BEZEAULT, Loic, 78150 LE CHESNAY (FR); LAW, Robin, 92380 GARCHES (FR)
(74) Mandataire: Renault Group
(86) Numéro de dépôt international: PCT/EP2019/080732
(87) Numéro de publication internationale: WO 2020/099274

(56) Documents cités:
- EP-A1- 0 907 545
- EP-A1- 2 347 920
- WO-A1-2018/115827
- GB-A- 2 535 764

## Description

L'invention concerne un corps de planche de bord à structure lacunaire et conduits de circulation de fluide intégrés.

Dans le domaine des véhicules automobiles, les planches de bord sont installées transversalement dans l'habitacle, à l'avant des places du conducteur et du passager avant et sont fixées à la caisse du véhicule, généralement au niveau des pieds avant. Le corps de planche de bord constitue l'ossature de la planche de bord. Il est recouvert d'une garniture ou peau formant la paroi externe de la planche de bord. Ce corps de planche de bord assure notamment le support de divers équipements tels que le tableau de bord, les indicateurs de conduite, des équipements de climatisation, d'autoradio et de navigation et divers moyens de contrôle de ces équipements.

De manière usuelle, un corps de planche de bord est composé de nombreux éléments assemblés, dont les conduits du système aéraulique du véhicule. Il s'agit en général de pièces en matériau polymère ou composite obtenues par moulage et assemblées ensuite par bouterollage, vissage, etc. L'assemblage d'un corps de planche de bord est donc relativement complexe et l'ensemble relativement lourd. Le document EP 0 907 545 A1 décrit un tel corps de planche de bord d'un véhicule automobile.

L'invention vise à pallier ces inconvénients en proposant un corps de planche de bord réalisé d'une seule pièce et intégrant des conduits de fluide, par exemple pour la circulation d'air.

A cet effet, l'objet de l'invention concerne un corps de planche de bord réalisé d'un seul tenant par un procédé de fabrication additive dite «impression en trois dimensions », également appelée « impression 3D », et présentant une structure lacunaire définissant au moins un conduit de circulation de fluide présentant au moins une ouverture.

Par « structure lacunaire », on entend une structure comportant des alvéoles, ajourages, et/ou cavités destinés à limiter la quantité de matière. La quantité de matière utilisée peut correspondre à une quantité de matière minimale nécessaire à la tenue mécanique de la structure pour l'utilisation envisagée. Cette quantité de matière peut être déterminée par calcul des efforts que doit supporter la structure, par exemple pour sa tenue propre sous son poids, pour tenir sous un effort réparti en surface, pour sa fixation à la caisse du véhicule, pour l'intégration d'éléments connexes (interfaces de fixations, intégration du bloc HVAC- «heating, ventilation and air-conditioning» (chauffage, ventilation et air conditionné), intégration des éléments des volumes de rangement, etc.).

La structure lacunaire du corps de planche de bord selon l'invention se présente ainsi sous la forme d'un réseau de matière formant des mailles et des noeuds. Un tel réseau peut être formé de parties semblables à des vaisseaux creux, semi pleins (structure intérieure appelée aussi latice) ou pleins interconnectés, au moins une partie de ces vaisseaux étant creux et pouvant être utilisés pour la circulation de fluide.

Dans un mode de réalisation, la structure lacunaire définit ainsi une pluralité de conduits de circulation de fluide dont au moins une partie sont fluidiquement interconnectés. Autrement dit, le fluide peut suivre un chemin formé par plusieurs vaisseaux creux interconnectés.

La ou les ouvertures permettent un raccordement du ou des conduits de circulation de fluide à un dispositif annexe distinct du corps de planche de bord, par exemple un dispositif de climatisation, de chauffage, d'aération ou autre, un raccordement à l'environnement extérieur au corps, ou les deux.

Le corps de planche de bord présente ainsi au moins une ouverture située sur une face externe d'un volume défini par le corps de planche de bord.

Par exemple, une telle ouverture peut être située sur une face du corps de planche de bord située à l'intérieur de l'habitacle lorsque le corps de planche de bord est monté dans un véhicule. Le fluide circulant peut alors être de l'air destiné à l'habitacle.

Le corps de planche de bord présente au moins une ouverture située à l'intérieur d'un volume défini par le corps de planche de bord. Une telle ouverture peut être utilisée pour raccorder le conduit à un dispositif annexe.

A noter que le fluide pourrait ne pas être destiné à l'habitacle, la ou les ouvertures peuvent alors être prévues dans une zone interne au volume du corps de la planche pour être raccordées directement et uniquement à un ou plusieurs dispositifs annexes.

La structure lacunaire du corps de planche de bord définit également au moins un boîtier de raccordement dans lequel débouche un ou plusieurs conduits de circulation de fluide et présentant une ouverture destinée à être raccordée à un dispositif annexe distinct du corps de planche de bord. Ces boîtiers de raccordement peuvent éventuellement présenter une autre ouverture débouchant sur une face externe d'un volume défini par le corps de planche de bord.

Le corps de planche de bord peut comporter une ossature interne de structure lacunaire d'un seul tenant avec une peau externe délimitant au moins en partie un volume du corps de planche de bord, ladite peau externe présentant une surface externe choisie parmi une surface lacunaire, une surface pleine, une surface présentant une ou plusieurs zones lacunaires et pleines. Notamment, cette peau externe peut correspondre à une partie visible de l'intérieur de l'habitacle lorsque le corps est monté à l'intérieur du véhicule.

Le corps de planche de bord selon l'invention est obtenu par impression en trois dimensions, par exemple par dépôt de filament en fusion (« Fused Déposition Modeling »- Réalisation d'un modèle par dépôt en fusion ou « Fused Filament Fabrication » - fabrication par filament en fusion) ou par frittage sélectif par laser (« sélective laser sintering »). A cet effet, tout matériau susceptible d'être imprimé par cette technique est utilisable.

Avantageusement, le matériau peut être un matériau polymère choisi parmi l'acrylonitrile-butadiène-styrène (ABS), le polypropylène (PP), l'acide polylactique (PLA). Le matériau polymère peut en outre être chargé en particules de verre ou de carbone.

L'invention concerne également une planche de bord comprenant un corps de planche de bord selon l'invention et au moins un dispositif annexe distinct du corps de planche de bord, ce dernier comportant un circuit de fluide raccordé à au moins un conduit de circulation de fluide du corps via une ouverture de celui-ci.

Dans un mode de réalisation :
- le dispositif annexe est choisi parmi un dispositif d'aération, un dispositif de chauffage et un dispositif de climatisation,
- le circuit de fluide est un circuit de fluide aéraulique raccordé à au moins un conduit de circulation de fluide du corps, dont une extrémité est en communication de fluide avec l'extérieur du corps de planche de bord, notamment destiné à déboucher à l'intérieur d'une partie d'habitacle du véhicule lorsque la planche de bord est montée à l'intérieur du véhicule.

L'invention concerne enfin un véhicule comportant une planche de bord selon l'invention.

Dans un mode de réalisation, lorsque le dispositif annexe est choisi parmi un dispositif d'aération, un dispositif de chauffage et un dispositif de climatisation, le conduit de circulation de fluide raccordé à un circuit aéraulique du dispositif annexe peut déboucher à l'intérieur d'une partie d'habitacle du véhicule.

L'invention est maintenant décrite en référence aux dessins annexés, non limitatifs, dans lesquels :
- la figure 1 est une vue en perspective d'un corps de planche de bord selon un mode de réalisation de l'invention, le corps étant vu de dessous depuis l'avant du véhicule ;
- la figure 2 est une vue en perspective partielle montrant le dessus du corps de planche de bord du côté de l'habitacle ;
- la figure 3 est une vue en perspective partielle montrant une zone interne du corps de planche de bord dirigée vers l'avant du véhicule ;
- la figure 4 est une vue en perspective d'une planche de bord selon un mode de réalisation de l'invention comprenant notamment le corps de planche de bord représenté sur les figures 1 à 3 et un dispositif de climatisation.

Dans la présente description, les termes avant, arrière, supérieur, inférieur, font référence aux directions avant et arrière du véhicule, lorsque le corps de planche de bord est monté transversalement à l'intérieur du véhicule. Les axes X, Y, Z, correspondent respectivement à l'axe longitudinal (d'avant en arrière), transversal et vertical du véhicule.

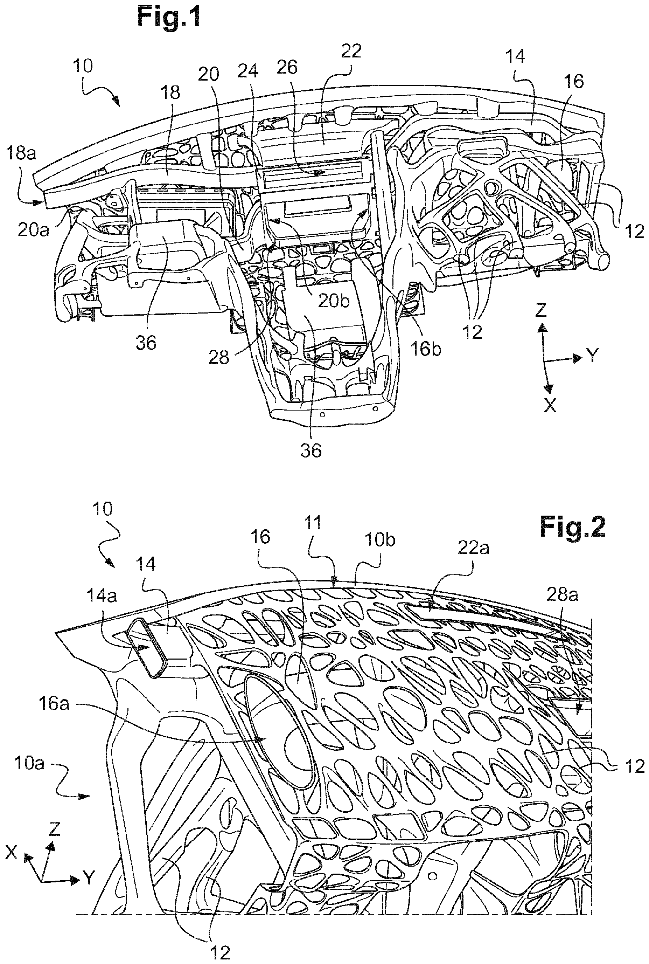

La figure 1 représente un corps de planche de bord 10 réalisé d'un seul tenant, ici par impression en trois dimensions. Selon l'invention, ce corps de planche de bord 10 présente une structure lacunaire.

Tel que visible sur la figure 1, on distingue ainsi un réseau de parties interconnectées semblables à des vaisseaux 12. L'épaisseur et la forme de chacun de ces vaisseaux 12 peuvent être choisies de manière à obtenir une structure utilisable pour l'utilisation souhaitée, par exemple remplissant des conditions de tenue mécanique, raideur, ou autre. De manière similaire, les zones d'interconnexion de ces vaisseaux 12 peuvent être de formes diverses et de dimensions diverses. Enfin, ces vaisseaux peuvent être creux ou pleins ou contenir une structure interne spécifique (semi-pleins). On notera en outre que des vaisseaux creux peuvent comprendre une structure interne formant un réseau (structure alvéolaire) permettant de renforcer la structure du vaisseau tout en laissant circuler un fluide à l'intérieur du vaisseau.

Selon l'invention, la structure lacunaire définit au moins un conduit de circulation de fluide présentant au moins une ouverture. Autrement dit, le ou les conduits sont intégrés à la structure et réalisés d'un seul tenant avec elle.

Dans l'exemple représenté, on distingue deux conduits 14, 16 situés sur le côté droit de la figure 1, deux conduits 18, 20 situés sur le côté gauche de la figure 1, un conduit 22 situé au centre.

Les conduits 14, 18 et 22 comportent chacun :
- une ouverture 14a, 18a et 22a qui débouche sur une face externe d'un volume défini par le corps de planche de bord 10 et,
- une autre ouverture 14b, 18b et 22b qui débouche à l'intérieur du volume défini par le corps de planche de bord 10.

Dans l'exemple représenté cette deuxième ouverture 14b, 18b et 22b débouche à l'intérieur d'un boîtier de raccordement 24 défini par la structure lacunaire.

Ce boîtier de raccordement 24, présente lui-même une ouverture 26 pour sa connexion à un dispositif annexe 30, ici un dispositif de climatisation.

De manière similaire, les conduits 16, 20 comportent chacun :
- une ouverture 16a, 20a qui débouche sur une face externe du volume défini par la planche de bord, et,
- une autre ouverture 16b, 20b qui débouche à l'intérieur du volume défini par le corps de planche de bord.

Ici, cette deuxième ouverture 16b, 20b débouche à l'intérieur d'un autre boîtier de raccordement 28 défini par la structure lacunaire. Ce deuxième boîtier 28 est disposé immédiatement en dessous du boîtier 24. Il présente une ouverture 28a débouchant sur une face externe 11 du volume défini par le corps de planche de bord 10 et une ouverture 28b pour son raccordement au dispositif annexe 30.

Bien entendu, la présente invention n'est pas limitée par le nombre de conduits, par le nombre de leurs ouvertures, ni par leur forme et leur disposition. Notamment, la forme et la disposition des conduits pourront dépendre de la tenue mécanique souhaitée pour le corps de planche de bord dans la mesure où ces conduits font parti intégrante de la structure.

En outre, les conduits représentés sont ici interconnectés via des boîtiers de raccordement. On peut toutefois envisager que ces conduits soient directement reliés les uns aux autres.

On comprend ainsi que la réalisation du corps de planche de bord par impression 3D autorise un très grand nombre d'architectures possibles.

Dans l'exemple représenté, le corps de planche de bord 10 comporte une ossature interne 10a de structure lacunaire réalisée d'un seul tenant avec une peau externe 10b délimitant en partie un volume du corps de planche de bord (fig.2).

Dans cet exemple, la peau externe 10b correspond sensiblement à la face du corps de planche de bord visible de l'intérieur de l'habitacle lorsque le corps de planche de bord est monté à l'intérieur du véhicule.

Dans l'exemple, la peau externe 10b présente elle-même une structure lacunaire. Ainsi, elle présente une surface externe 11 comportant des zones lacunaires et pleines, ressemblant ainsi à un tissus ou réseau à mailles larges. On notera en outre que l'ossature interne 10a comporte des vaisseaux 12 dans l'ensemble plus épais que ceux constituant la peau externe 10b.

Une telle peau externe 10b ajourée pourra éventuellement être recouverte d'une surface technique continue (pleine), non représentée, tels que par exemple un textile ou autre. En option, l'ossature interne 10a peut aussi être recouverte de la même surface en partie basse de la planche.

En variante, cette peau externe 10b pourrait présenter une surface externe pleine ou encore une surface présentant une ou plusieurs zones lacunaires et pleines (non représenté).

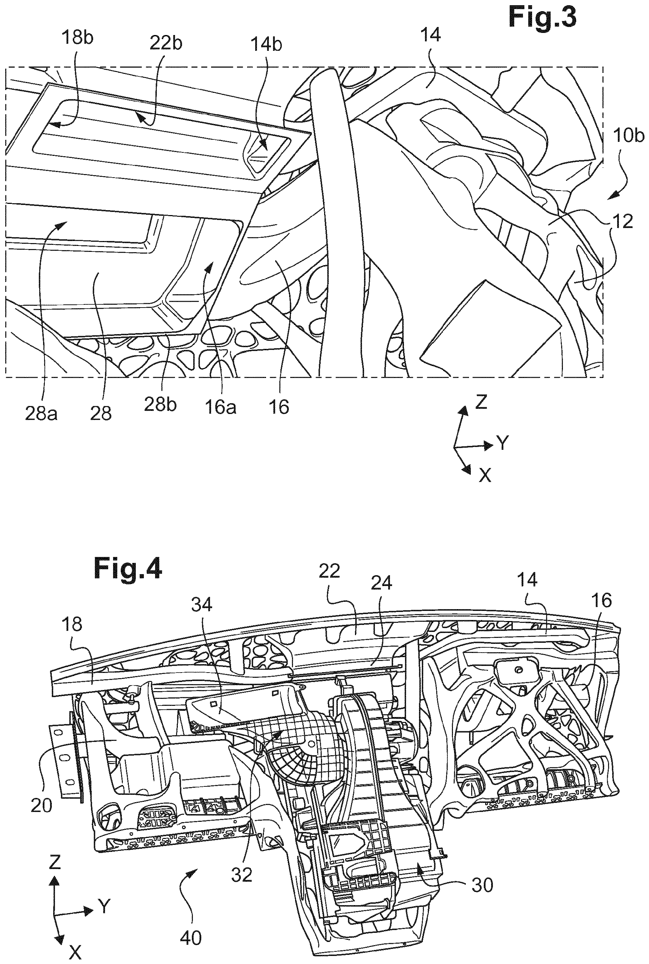

La figure 4 représente une planche de bord 40 comportant le corps de planche de bord 10 précédemment décrit et un dispositif annexe 30, ici un dispositif de climatisation. Ce dispositif annexe 30 est distinct du corps de planche de bord et fixé à ce dernier, par exemple au moyen de vis, bouterolles, rivets, etc (non représentées).

Ce dispositif annexe 30 comporte un circuit de fluide aéraulique 32 dont on distingue une ouverture 34 de prise d'air sur la figure 4. Le circuit de fluide aéraulique 32 est raccordé aux conduits 14 à 22 du corps de planche de bord via les boîtiers de raccordement 24 et 28.

L'intégration des conduits 14 à 22 du corps de planche à la structure même de ce corps de planche permet de réduire de manière notable le nombre de pièces à assembler et d'alléger considérablement le poids du corps de la planche de bord. Il est ainsi possible de réaliser un corps de planche de bord pesant environ 13 kg contre plus de 23 kg pour un corps de planche de bord classique formé de plusieurs pièces assemblées.

En outre, la forme et l'agencement des différents conduits n'est plus contrainte par les fixations de ces éléments.

L'impression en 3D permet également d'intégrer d'autres fonctions au corps de planche de bord, tel que des boîtiers 36 pour bac de rangement, des logements pour air-bag, etc.

Dans la description ci-dessus, le terme « corps de planche de bord » désigne la structure principale de la planche de bord, qui définit sa forme générale, son volume et ses dimensions, avec une rigidité et une tenue mécanique nécessaire à son usage comme planche de bord, pour accueillir des instruments de conduite, des accessoires divers et des compartiments de rangement.

## Revendications

1. Corps de planche de bord (10), **caractérisé en ce que** ledit corps est réalisé d'un seul tenant par impression en trois dimensions, et **en ce qu'**il présente une structure lacunaire définissant au moins un conduit de circulation de fluide (14-22) présentant au moins une ouverture (14a-22a ; 14b, 22b), la structure lacunaire définissant une pluralité de conduits de circulation de fluide dont au moins une partie sont fluidiquement interconnectés, le corps présentant au moins une ouverture (14a-22a) située sur une face externe d'un volume défini par le corps de planche de bord et au moins une ouverture (14b, 22b) située à l'intérieur d'un volume défini par le corps de planche de bord, la structure lacunaire définissant au moins un boîtier de raccordement (24, 28) dans lequel débouche un ou plusieurs conduits de circulation de fluide et présentant une ouverture (26, 28b) destinée à être raccordée à un dispositif annexe distinct du corps de planche de bord.

2. Corps de planche de bord (10) selon la revendication 1, **caractérisé en ce qu'**il comporte une ossature interne (10a) de structure lacunaire d'un seul tenant avec une peau externe (10b) délimitant au moins en partie un volume du corps de planche de bord, ladite peau externe (10b) présentant une surface externe (11) choisie parmi une surface lacunaire, une surface pleine, une surface présentant une ou plusieurs zones lacunaires et pleines.

3. Corps de planche de bord (10) selon l'une quelconque des revendications 1 à 2, caractérisé en qu'il est en un matériau polymère choisi parmi l'acrylonitrile-butadiène-styrène, le polypropylène, l'acide polylactique.

4. Planche de bord, **caractérisée en ce qu'**elle comprend un corps de planche de bord (10) selon l'une quelconque des revendications 1 à 3 et au moins un dispositif annexe (30) distinct du corps de planche de bord, ce dernier comportant un circuit de fluide (32) raccordé à au moins un conduit de circulation de fluide (14-22) du corps via une ouverture de celui-ci.

5. Planche de bord selon la revendication 4, **caractérisée en ce que** :
- le dispositif annexe (30) est choisi parmi un dispositif d'aération, un dispositif de chauffage et un dispositif de climatisation,
- le circuit de fluide (32) est un circuit de fluide aéraulique raccordé à au moins un conduit de circulation de fluide (14-22) du corps, dont une extrémité est en communication de fluide avec l'extérieur du corps de planche de bord.

6. Véhicule comportant une planche de bord selon l'une quelconque des revendications 4 ou 5.

## Patentansprüche

1. Armaturenbrettkörper (10), **dadurch gekennzeichnet, dass** der Körper durch dreidimenensionalen Druck einstückig ausgeführt ist und dass er eine mit Lücken versehene Struktur aufweist, die mindestens einen Fluidzirkulationskanal (14-22) definiert, der mindestens eines Öffnung (14a-22a; 14b, 22b) aufweist, wobei die mit Lücken versehene Struktur eine Vielzahl von Fluidzirkulationskanälen definiert, von denen mindestens ein Teil fluidisch miteinander verbunden sind, wobei der Körper mindestens eine Öffnung (14a-22a), die sich an einer Außenfläche eines Volumens, das durch den Armaturenbrettkörper definiert wird, und mindestens eine Öffnung (14b, 22b), die sich im Inneren eines Volumens, das durch den Armaturenbrettkörper definiert wird, befindet, aufweist, wobei die mit Lücken versehene Struktur mindestens einen Verbindungskasten (24, 28) definiert, in den ein oder mehrere Fluidzirkulationskanäle münden und der eine Öffnung (26, 28b) aufweist, die dazu bestimmt ist, mit einer Zusatzvorrichtung verbunden zu sein, die sich von dem Armaturenbrettkörper unterscheidet.

2. Armaturenbrettkörper (10) nach Anspruch 1, **dadurch gekennzeichnet, dass** er ein Innengerüst (10a) mit einer mit Lücken versehenen Struktur umfasst, das einstückig mit einer Außenhaut (10b) ausgeführt ist, die mindestens teilweise ein Volumen des Armaturenbrettkörpers begrenzt, wobei die Außenhaut (10b) eine Außenoberfläche (11) aufweist, die aus einer mit Lücken versehenen Struktur, einer geschlossenen Oberfläche, einer Oberfläche, die eine oder mehrere mit Lücke versehene und geschlossene Bereich aufweist, ausgewählt ist.

3. Armaturenbrettkörper (10) nach einem beliebigen der Ansprüche 1 bis 2, **dadurch gekennzeichnet, dass** er aus einem Polymermaterial besteht, das aus AcrylnitrilButadien-Styrol, Polypropylen, Polyactid ausgewählt ist.

4. Armaturenbrett, **dadurch gekennzeichnet, dass** es einen Armaturenbrettkörper (10) nach einem beliebigen der Ansprüche 1 bis 3 und mindestens eine Zusatzvorrichtung (30), die sich von dem Armaturenbrettkörper unterscheidet, beinhaltet, wobei letzterer einen Fluidkreislauf (32) umfasst, der mit mindestens einem Fluidzirkulationskanal (14-22) des Körpers mittels einer Öffnung desselben verbunden ist.

5. Armaturenbrett nach Anspruch 4, **dadurch gekennzeichnet, dass**:
- die Zusatzvorrichtung (30) aus einer Belüftungsvorrichtung, einer Heizvorrichtung und einer Klimavorrichtung ausgewählt ist,
- der Fluidkreislauf (32) ein lufttechnischer Fluidkreislauf ist, der mit mindestens einem Fluidzirkulationskanal (14-22) des Körpers verbunden ist, von dem ein Ende mit dem Äußeren des Armaturenbrettkörpers in Fluidkommunikation steht.

6. Fahrzeug, das ein Armaturenbrett nach einem beliebigen der Ansprüche 4 oder 5 umfasst.

## Claims

1. Dashboard body (10), **characterized in that** said body is produced as a single piece by three-dimensional printing, and **in that** it has a lacunary structure defining at least one fluid circulation duct (14-22) having at least one opening (14a-22a; 14b, 22b), the lacunary structure defining a plurality of fluid circulation ducts of which at least some are fluidically interconnected, the body exhibiting at least one opening (14a-22a) situated on an external face of a volume defined by the dashboard body and at least one opening (14b, 22b) situated inside a volume defined by the dashboard body, the lacunary structure defining at least one connection box (24, 28) into which one or more fluid circulation ducts open and which exhibits an opening (26, 28b) intended to be coupled to an ancillary device distinct from the dashboard body.

2. Dashboard body (10) according to Claim 1, **characterized in that** it comprises a lacunary structure internal framework (10a) of one piece with an external skin (10b) at least in part delimiting a volume of the dashboard body, said external skin (10b) having an external surface (11) chosen from a lacunary surface, a solid surface, a surface exhibiting one or more lacunary zones and solid zones.

3. Dashboard body (10) according to either one of Claims 1 and 2, **characterized in that** it is made of a polymer material selected from acrylonitrile-butadienestyrene, polypropylene, polylactic acid.

4. Dashboard, **characterized in that** it comprises a dashboard body (10) according to any one of Claims 1 to 3 and at least one ancillary device (30) distinct from the dashboard body, the latter comprising a fluid circuit (32) connected to at least one fluid circulation duct (14-22) of the body via an opening thereof.

5. Dashboard according to Claim 4, **characterized in that**:
- the ancillary device (30) is chosen from a ventilation device, a heating device and an air conditioning device,
- the fluid circuit (32) is an aeraulic-fluid circuit connected to at least one fluid circulation duct (14-22) of the body, of which one end is in fluidic communication with the outside of the dashboard body.

6. Vehicle comprising a dashboard according to either one of Claims 4 and 5.
